# EUROPÄISCHE PATENTSCHRIFT

(11) **EP 1 195 296 B1**
(45) Veröffentlichungstag und Bekanntmachung des Hinweises auf die Patenterteilung: **13.12.2006**
(21) Anmeldenummer: 01123763.3
(22) Anmeldetag: 04.10.2001
(51) Int. Cl.: B60Q 1/26, B60R 1/12

(54) **Seitenblinkleuchte**
Direction indicating side light
Feu latéral indicateur de direction

(30) Priorität: 04.10.2000 DE 20017038 U; 04.12.2000 DE 20020544 U
(43) Veröffentlichungstag der Anmeldung: 10.04.2002
(73) Patentinhaber: FER Fahrzeugelektrik GmbH, 99819 Eisenach (DE)
(72) Erfinder: Künstler, Rolf, 99817 Eisenach (DE); Matthie, Daniel, 99834 Gerstungen (DE); Bräutigam, Markus, 36433 Immelborn (DE); Schwanz, Martina, 99831 Creuzburg (DE)
(74) Vertreter: Strasser, Wolfgang

(56) Entgegenhaltungen:
- EP-A- 0 858 932
- EP-A- 0 941 892
- EP-A- 1 022 510
- DE-A- 19 828 253
- DE-U- 20 001 407
- DE-U- 20 004 188
- US-A- 5 373 280
- US-A- 5 490 049

## Beschreibung

Die Erfindung betrift eine Seitenblinkleuchte für den Einbau in die Abdeckkappe eines Außenrückspiegels für Kraftfahrzeuge gemäß dem Oberbegriff von Anspruch 1.

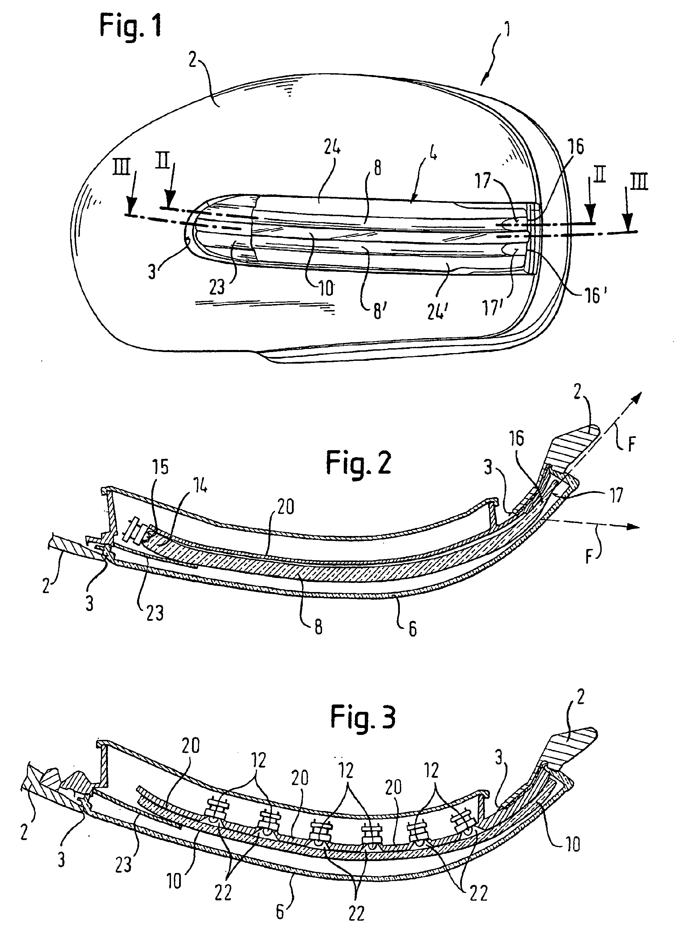

Beispielsweise aus DE 198 28 253 A1 ist eine solche Seitenblinkleuchte bekannt, bei der als erste Lichtquellenanordnung eine Leuchtfolie dient, die auf der in Fahrtrichtung vorderen Außenseite des Spiegelgehäuses angeordnet ist und sich entlang dieser so erstreckt, dass sie entgegen der Fahrtrichtung gesehen den hinter ihr liegenden Lichtleiter vollständig überdeckt. Da eine solche Leuchtfolie nicht transparent ist, ist der Lichtleiter nicht sichtbar. Die bekannte Seitenblinkleuchte besitzt somit ein flächiges Aussehen, wie man dies insbesondere der dortigen Figur 2 entnehmen kann.

Der älteren deutschen Patentanmeldung 199 33 724.1 ist eine Seitenblinkleuchte entnehmbar, die ein Leuchtengehäuse mit einer Lichtaustrittsöffnung umfaßt, die durch eine lichtdurchlässige Lichtscheibe verschlossen ist. Der Einbauort der Seitenblinkleuchte in die Abdeckkappe befindet sich an dem vom Kraftfahrzeug entfernt liegenden, nach außen weisenden Ende der Abdeckkappe, wobei eine Gruppe von Lichtquellen vorgesehen ist, die von Glühlampen gebildet werden, hinter denen jeweils ein Reflektor angeordnet ist, und die längs einer sich im eingebauten Zustand im wesentlichen horizontal erstreckenden Linie so angeordnet sind, dass die Hauptabstrahlrichtung des von ihnen abgegebenen Lichts in etwa der Fahrtrichtung entspricht. Die Lichtscheibe ist so geformt, dass sie die Außenkontur der Abdeckkappe kontinuierlich fortsetzt, wobei sie in der auf die Einbaulage bezogenen Draufsicht so gekrümmt ist, dass sie einen Winkel von etwa 90° überspannt, das heißt mit ihrem äußersten Endbereich in etwa quer zur Fahrtrichtung weist. Dort ist eine weitere Glühlampe angeordnet, die einen eigenen Reflektor besitzt, der in Verbindung mit einem zusätzlich vorgesehenen Prisma das von ihm reflektierte Licht dieser weiteren Glühlampe in einen quer zur Fahrtrichtung und schräg nach hinten weisenden Winkelbereich aussendet, damit die Seitenblinkleuchte im eingeschalteten Zustand auch für Personen erkennbar ist, die sich seitlich vom Kraftfahrzeug oder schräg hinter diesem befinden.

Nachteilig an dieser bekannten Anordnung ist, dass die Glühlampen und die sie zumindest teilweise umgebenden Reflektoren zu einer relativ großen Einbautiefe der Seitenblinkleuchte führen.

Weiterhin ist aus der EP 1 022 187 eine Fahrzeugleuchte, insbesondere eine Seitenblinkleuchte zum Einbau in einem Kraftfahrzeug-Außenspiegel bekannt, bei der die Lichtscheibe als Lichtleiter dient, in den seitlich das Licht von Leuchtdioden oder Glühlampen eingekoppelt und in einen bestimmten Raumbereich abgestrahlt wird. Dabei ist zusätzlich zur gesetzlich vorgeschriebenen Abstrahlrichtung auch eine Abstrahlung in Fahrtrichtung, das heißt nach vorn erwünscht. Zu diesem Zweck ist bei der bekannten Seitenblinkleuchte an der innenliegenden Rückseite der Lichtscheibe eine optisch wirksame Struktur vorgesehen, die dafür sorgt, dass ein großer Teil des eingekoppelten Lichts durch die äußere Hauptfläche der Lichtscheibe nach vorn abgestrahlt wird. Der Rest des eingekoppelten Lichts tritt an der der Einkoppelkante gegenüber liegenden Stimkante der Lichtscheibe aus und wird dort in den gesetzlich vorgeschriebenen Bereich abgestrahlt. Um eine ausreichende Lichtstärke zu erzielen, ist der Einsatz von sehr lichtstarken Leuchtdioden und/oder von zusätzlichen Leuchtdioden erforderlich, welche durch den Lichtleiter annähernd in Fahrtrichtung hindurch strahlen.

Aus der EP-A-0 941 892 sind verschiede Ausführungsformen von Seitenblinkleuchten bekannt, die in Kraftfahrzeug-Außenspiegel eingebaut sind. Nur eine einzige dieser Ausführungsformen weist einen scheibenförmigen Lichtleiter auf, der sich im eingebauten Zustand in etwa horizontal über die Breite der Lichtaustrittsöffnung erstreckt und in dessen näher beim Fahrzeug liegende Stirnkante das Licht einer Lichtquellenanordnung eingekoppelt wird, das er nahezu vollständig zu seiner gegenüberliegenden Stimkante weiterleitet und dort In einer zur Fahrtrichtung schräg nach hinten verlaufenden Richtung abstrahlt. Die in Fahrtrichtung abstrahlende Lichtquellenanordnung besteht aus einer Gruppe von matrixartig angeordneten Lichtquellen, die in einem im Vergleich zur Breite der Lichtaustrittsöffnung schmalen Bereich auf der näher beim Fahrzeug liegenden Seite der Seitenblinkleuchte konzentriert ist.

Demgegenüber liegt der Erfindung die Aufgabe zugrunde, eine Seitenblinkleuchte der im Oberbegriff eingangs genannten Art so weiterzubilden, dass die erforderliche Lichtstärke in allen gewünschten Abstrahlrichtungen auch bei Verwendung weniger starker Leuchtdioden gewährleistet ist und gleichzeitig eine möglichst geringe Einbautiefe erzielt werden kann.

Zur Lösung dieser Aufgabe sieht die Erfindung die im Anspruch 1 zusammengefaßten Merkmale vor.

Dadurch, dass einerseits die erste Lichtquellenanordnung von wenigstens einer linear ausgebildeten, sich horizontal über die Breite der Lichtaustrittsöffnung erstreckenden Gruppe von einzelnen Lichtquellen gebildet wird, und andererseits die sich in gleicher Richtung erstreckenden Lichtleiter stabförmig ausgebildet sind, wird es möglich, der erfindungsgemäßen Seitenblinkleuchte eine streifenförmige Struktur zu verleihen, die zu einem ästhetisch ansprechenden Erscheinungsbild führt.

Gleichzeitig wird die geringe Einbautiefe beibehalten.

In jeden der Lichtleiter, die sich in etwa parallel zur Lichtscheibe quer über die langgestreckte Lichtaustrittsöffnung erstreckten, wird das Licht einer Leuchtdiode, seitlich eingekoppelt und von diesem zu der an seinem gegenüber liegenden Stirnende liegenden Auskoppelfläche transportiert. Im Gegensatz zu der in der EP 1 022 187 beschriebenen Lösung besitzen diese Lichtleiter an ihrer Rückseite keine optisch wirksame Strukturen, die zu einer Abstrahlung des Lichts in Fahrtrichtung führen. Somit wird praktisch das gesamte in die Lichtleiter eingekoppelte Licht an ihren am äußeren Ende befindlichen Auskoppelflächen in den gesetzlich vorgeschriebenen Bereich abgestrahlt.

Die zusätzlich gewünschte Abstrahlung in etwa in Fahrtrichtung wird über wenigstens eine Reihe von Leuchtdioden erzielt, welche direkt hinter der Lichtscheibe und/oder hinter einem Optikelement, vorzugsweise einer langgestreckten, in Einbaulage nur in vertikaler Richtung aktiven Linse angeordnet sind, die das von ihnen abgegebene Licht in vertikaler Richtung bündelt.

Diese Linse kann entweder ein zusätzliches, oberhalb oder unterhalb der Lichtleiter angeordnetes Bauelement sein, das gewünschten falls mit den Lichtleitern einstükkig ausgebildet sein kann, oder es kann von dem Lichtleitern selbst gebildet werden, die dann gleichzeitig auch als in vertikaler Richtung wirksame Sammellinsen dienen.

Durch diese Leuchtdiodenanordnung ist die Leuchte nicht nur in der gesetzlich vorgeschriebenen Richtung sondern auch von vorn und seitlich auch bei hellen Umgebungsbeleuchtungsstärken gut sichtbar.

Die Einbautiefe der Leuchte ist im Gegensatz zu Lösungen mit einem Reflektor sehr gering.

Diese und weitere Merkmale und vorteilhafte Ausgestaltungen der Erfindung sind in den Ansprüchen niedergelegt.
- Fig. 1: eine schematisierte, perspektivische Rückansicht eines Kraftfahrzeug-Außenspiegels in seiner Anbauposition auf der Fahrerseite, in den eine erste Ausführungsform der erfindungsgemäßen Seitenblinkleuchte eingebaut ist,
- Fig. 2: in vergrößertem Maßstab einen horizontalen Teil-Schnitt durch den Außenspiegel aus Fig. 1 längs der Linie II-II,
- Fig. 3: in vergrößertem Maßstab einen horizontalen Teil-Schnitt durch den Außenspiegel aus Fig. 1 längs der Linie III-III,
- Fig. 4: eine der Fig. 1 entsprechende Darstellung mit einer zweiten Ausführungsform der erfindungsgemäßen Seitenblinkleuchte und
- Fig. 5: in vergrößertem Maßstab einen horizontalen Teil-Schnitt durch den Außenspiegel aus Fig. 4 längs der Linie V-V.

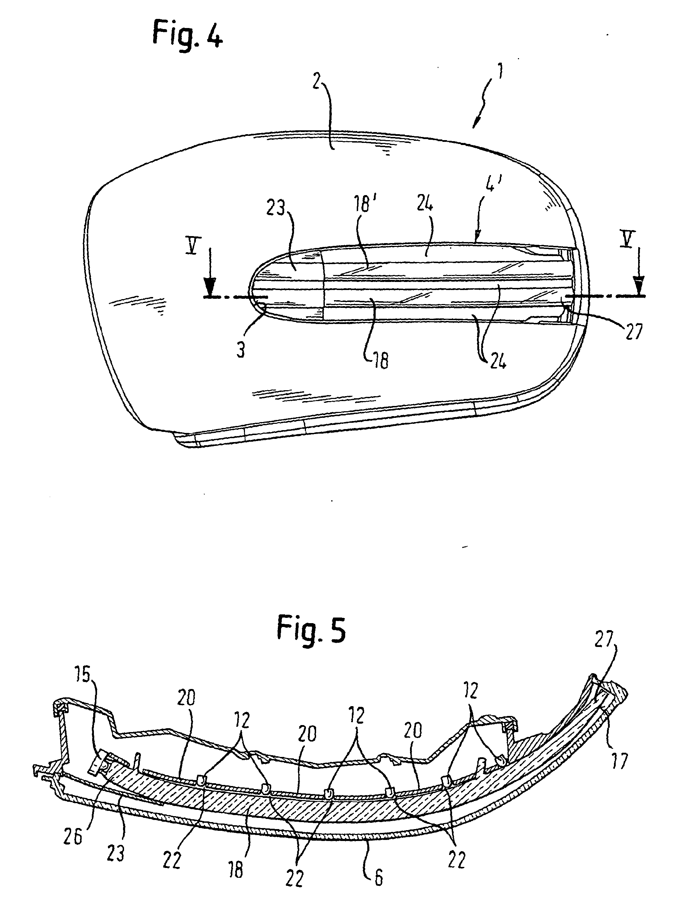

Fig. 1 und 4 zeigen jeweils eine perspektivische, entgegen der Fahrtrichtung gesehene Ansicht eines Außenrückspiegels 1 für Kraftfahrzeuge, der eine Abdeckkappe 2 mit einer langgestreckten, im eingebauten Zustand im wesentlichen horizontal verlaufenden Lichtaustrittsöffnung 3 aufweist, in die von hinten eine erfindungsgemäße Seitenblinkleuchte 4 bzw. 4' eingebaut ist. Die in den Fig. 2, 3 und 5 dargestellte, die Lichtaustrittsöffnung 3 verschließende, optisch nicht aktive Lichtscheibe 6 ist in den Fig. 1 und 2 der Deutlichkeit halber weggelassen.

Wie man den Fig. 1 und 4 deutlich entnimmt, besitzen die erfindungsgemäßen Seitenblinkleuchten 4 und 4' eine streifenförmige Struktur.

Diese kommt bei der Ausführungsform nach den Fig. 1 bis 3 dadurch zustande, daß in vertikaler Richtung alternierend unterschiedliche, langgestreckte, sich horizontal erstreckende Bereiche vorgesehen sind, die von zwei als Lichtstäbe ausgebildeten Lichtleitern 8, 8' und einer dazwischen liegenden streifen- oder stabförmigen Linse 10 gebildet werden.Hinter dieser Linse 10 ist eine Gruppe von Lichtquellen 12 angeordnet, die von Leuchtdioden (siehe Fig. 3) gebildet werden. Ihr in etwa in Fahrtrichtung abgestrahltes Licht wird von der Linse 10 in vertikaler Richtung gesammelt und in einen vorgebbaren Winkelbereich gebündelt.

Wie man Fig. 2 entnimmt, ist an dem einen, in der Figur linken Stirnende 14 eines jeden stabförmigen Lichtleiters 8, 8' eine weitere Leuchtdiode 15 so angeordnet, daß das von ihr abgegebene Licht in den stabförmigen Lichtleiter 8, 8' eingekoppelt und von diesem praktisch vollständig zu seinem gegenüber liegenden Stimende 16, 16' weitergeleitet wird. An diesem Stirnende 16, 16' ist jeder der stabförmigen Lichtleiter 8, 8' mit einer als Auskoppelfläche dienenden Abschrägung 17, 17' versehen, deren Neigung so gewählt ist, daß das durch sie hindurch austretende Licht in den gesetzlich vorgeschriebenen Raumwinkelbereich, d. h. im wesentlichen quer zur Fahrtrichtung und etwas nach schräg hinten abgestrahlt wird, wie dies durch die Pfeile F angedeutet ist.

Hinter den stabförmigen Lichtleitern 8, 8' ist eine in vertikaler Richtung durchgehende, bedampfte Reflektorblende 20 angeordnet, die im Bereich der längs einer horizontalen Linie angeordneten Leuchtdioden 12 Durchbrüche 22 (Fig. 3) aufweist, durch welche die Leuchtdioden 12 hindurchragen. Dabei erweitert sich jeder Durchbruch 22 von der zugehörigen Leuchtdiode 12 weg stumpfkegelig nach außen, um so jeweils einen kleinen Reflektor zu bilden.

Auf der in den Figuren jeweils linken Seite sind die Enden der stabförmigen Lichtleiter 8, 8' und der Linse 10 sowie die oberhalb des oberen stabförmigen Lichtleiters 8 und unterhalb des unteren stabförmigen Lichtleiters 8' befindlichen, quer verlaufenden, streifenförmigen Bereiche 24, 24' durch eine bedampfte Abdeckblende 23 überdeckt.

Dadurch, daß die Form der langgesteckten Linse 10 an den Design der stabförmigen Lichtleiter 8, 8' angepaßt ist, ergibt sich im ausgeschalteten Zustand der Seitenblinkleuchte ein gleichmäßiges, streifenförmiges, ästhetisch sehr ansprechendes Erscheinungsbild, das durch die optisch inaktive, vor der langgesteckten Linse und den stabförmigen Lichtleitern liegende Lichtscheibe 6 hindurch deutlich wahrgenommen werden kann.

Die stabförmigen Lichtleiter 8, 8' und die langgestreckte Linse 10 können als Einzelteile, vorzugsweise jedoch einstückig gefertigt werden.

Bei der eben beschriebenen Ausführungsform ist eine Linse 10 zwischen zwei stabförmigen Lichtleitern 8, 8' angeordnet. Dies ist jedoch nicht einschränkend zu verstehen und es kann jede beliebige andere Zahl von Lichtleitern und Linsen miteinander alternierend vertikal übereinander vorgesehen werden.

Bei dem in den Fig. 4 und 5 gezeigten Ausführungsbeispiel, in welchem gleiche Teile mit den gleichen Bezugszeichen wie in den Fig. 1 bis 3 bezeichnet sind, sind zwei optisch aktive, stabförmige, im wesentlichen horizontal verlaufende, mit einem gegenseitigen vertikalen Abstand im wesentlichen parallel zueinander angeordnete Bauelemente 18, 18' vorgesehen, die eine doppelte Funktion ausüben:

Sie dienen einerseits als stabförmigen Lichtleiter, in dessen in Fig. 5 linkes Stirnende 26 das von einer Leuchtdiode 15 abgegebene Licht so eingekoppelt wird, daß er es praktisch vollständig zu seinem gegenüberliegenden Stirnende 27 weiterleitet, wo er es in der gleichen Weise abstrahlt, wie dies oben für die Ausführungsform der Fig. 1 bis 3 beschrieben wurde.

Zum anderen sind sie aber auch als in vertikaler Richtung wirkende Sammellinsen ausgebildet, übernehmen also auch die Funktion der oben beschriebenen Sammellinsen 10, indem sie das Licht der unmittelbar hinter ihnen angeordneten Leuchtdioden 12 (siehe Fig. 5) in vertikaler Richtung sammeln und in einen vorgebbaren Winkelbereich bündeln.

Auch bei dieser Ausführungsform ist eine in vertikaler Richtung durchgehende, bedampfte Reflektorblende 20 vorgesehen, die Durchbrüche 22 aufweist, durch welche die Leuchtdioden 12 hindurch ragen. Die zuletzt beschriebene Ausführungsform ist deswegen besonders vorteilhaft, weil die Anzahl der für sie benötigten Bauelemente gegenüber der anderen Ausführungsform deutlich vermindert ist.

Alle Leuchtdioden können auf einem Stanzgitter oder einer flexiblen Leiterplatte montiert sein, das bzw. die gleichzeitig für die Stromzuführung sorgt.

## Patentansprüche

1. Seitenblinkleuchte (4, 4') für den Einbau in die Abdeckkappe (2) eines Aussenrückspiegels (1) für Kraftfahrzeuge mit
- einem Leuchtengehäuse, das eine langgestreckte Lichtaustrittsöffnung (3) aufweist, die sich im eingebauten Zustand von der vom Fahrzeug entfernt liegenden Aussenseite der Abdeckkappe (2) ausgehend in etwa horizontal zum Fahrzeug hin erstreckt,
- einer ersten Lichtquellenanordnung (12), die sich im eingebauten Zustand in etwa horizontal über die Breite der Lichtaustrittsöffnung (3) erstreckt ,
- wenigstens einem Lichtleiter (8, 8'; 18), der sich im eingebauten Zustand in etwa horizontal über die Breite der Lichtaustrittsöffnung (3) erstreckt, und
- wenigstens einer weiteren Lichtquelle (15), deren Licht in das näher beim Fahrzeug liegende Stirnende (14; 26) des Lichtleiters (8, 8'; 18) eingekoppelt wird, der es nahezu vollständig zu seinem gegenüberliegenden Stirnende (16; 27) leitet und dort in einer zur Fahrtrichtung im wesentlichen schräg nach hinten verlaufenden Richtung abstrahlt
**dadurch gekennzeichnet,**
**dass** die erste Lichtquellenanordnung (12) aus wenigstens einer Gruppe von Lichtquellen besteht, die in etwa gleichförmig verteilt längs einer Linie angeordnet sind, die sich im eingebauten Zustand in etwa horizontal über die Breite der Lichtaustrittsöffnung (3) erstreckt,
**dass** sie mehr als einen Lichtleiter (8, 8'; 18, 18') umfasst, die jeweils stabförmig ausgebildet sind und sich in etwa parallel zueinander erstrecken, und
**dass** jeder der Lichtleiter (8, 8'; 18) an seinem freien Stirnende (14, 14'; 27) das Licht der weiteren Lichtquelle (15) auch in einer bezüglich der Fahrtrichtung nach hinten weisenden Richtung abstrahlt.

2. Seitenblinkleuchte nach Anspruch 1, **dadurch gekennzeichnet, dass** der Lichtleiter (8, 8'; 18) an seinem freien Stirnende (16, 16'; 27), an welchem er das von der Lichtquelle eingekoppelte Licht abstrahlt, mit einer Abschrägung (17, 17') versehen ist.

3. Seitenblinkleuchte nach Anspruch 1 oder 2, **dadurch gekennzeichnet, dass** die wenigstens eine Gruppe von Lichtquellen (12) aus Leuchtdioden besteht.

4. Seitenblinkleuchte nach einem der vorhergehenden Ansprüche, **dadurch gekennzeichnet, dass** die wenigstens eine weitere Lichtquelle (15) eine Leuchtdiode ist.

5. Seitenblinkleuchte nach einem der vorhergehenden Ansprüche, **dadurch gekennzeichnet, dass** wenigstens ein optisch aktives Bauelement (10) vorgesehen ist, welches das Licht der wenigstens einen Gruppe von Lichtquellen (12) in einer Hauptabstrahlrichtung bündelt, die im eingebauten Zustand im wesentlichen in Fahrtrichtung weist.

6. Seitenblinkleuchte nach Anspruch 5, **dadurch gekennzeichnet, dass** das optisch aktive Bauelement (10) eine vor der wenigstens einen Gruppe von Lichtquellen (12) angeordnete, streifen- bzw. stabförmige, das von den Lichtquellen (12) ausgehende Licht in vertikaler Richtung bündelnde Sammellinse ist.

7. Seitenblinkleuchte nach nach Anspruch 6, **dadurch gekennzeichnet, dass** der Lichtleiter (18, 18') gleichzeitig das optisch aktive Bauelement bildet und vor der wenigstens einen Gruppe von Lichtquellen (12) angeordnet ist, wobei er als Sammellinse ausgebildet ist und das von den Lichtquellen (12) ausgehende Licht in vertikaler Richtung bündelt.

8. Seitenblinkleuchte nach einem der vorhergehenden Ansprüche, **dadurch gekennzeichnet, dass** sie mehrere Gruppen von Lichtquellen (12) umfasst, die jeweils längs einer Linie in etwa gleichförmig verteilt angeordnet sind, wobei diese Linien zueinander in etwa parallel verlaufen.

9. Seitenblinkleuchte nach Anspruch 8, **dadurch gekennzeichnet, dass** mehrere Lichtleiter (8, 8) und mehrere Sammellinsen (10) in vertikaler Richtung alternierend und unmittelbar aneinander anschließend angeordnet sind, jeweils in etwa die gleiche Höhe besitzen und miteinander einstückig ausgebildet sind.

10. Seitenblinkleuchte nach einem der vorhergehenden Ansprüche, **dadurch gekennzeichnet, dass** zwischen den Lichtquellen (12) und hinter jedem der Lichtleiter (8, 8'; 18) eine bedampfte Reflektorblende (20) angeordnet ist.

11. Seitenblinkleuchte nach einem der vorhergehenden Ansprüche, **dadurch gekennzeichnet, dass** die Lichtaustrittsöffnung (3) durch eine Lichtscheibe (6) verschlossen ist.

## Claims

1. A side flashing lamp (4, 4') for fitting in the cover cap (2) of an external rear view mirror (1) for motor vehicles, comprising
- a lamp housing having an elongate light exit opening (3) which in the installed condition extends from the outward side of the cover cap (2), which is remote from the vehicle, substantially horizontally towards the vehicle,
- a first light source arrangement (12) which in the installed condition extends substantially horizontally over the width of the light exit opening (3),
- at least one light guide (8, 8'; 18) which in the installed condition extends substantially horizontally over the width of the light exit opening (3), and
- at least one further light source (15) whose light is coupled into the end (14; 26) of the light guide (8, 8'; 18) closer to the vehicle, the light guide passing the light almost completely to its opposite end (16; 27) and there emitting it in a direction extending substantially inclinedly rearwardly with respect to the direction of travel,
**characterised in that**
the first light source arrangement (12) comprises at least one group of light sources which are arranged distributed substantially uniformly along a line which in the installed condition extends substantially horizontally over the width of the light exit opening (3),
it includes more than one light guide (8, 8'; 18, 18') which are each of a bar-shaped configuration and extend substantially parallel to each other, and
each of the light guides (8, 8'; 18) at its free end (14, 14'; 27) also emits the light from the further light source (15) in a direction facing rearwardly with respect to the direction of travel.

2. A side flashing lamp according to claim 1 **characterised in that** the light guide (8, 8'; 18) has a bevel (17, 17') at its free end (16, 16'; 27) at which it emits the light coupled in by the light source.

3. A side flashing lamp according to claim 1 or claim 2 **characterised in that** the at least one group of light sources (12) comprises light emitting diodes.

4. A side flashing lamp according to one of the preceding claims **characterised in that** the at least one further light source (15) is a light emitting diode.

5. A side flashing lamp according to one of the preceding claims **characterised in that** there is provided at least one optically active device (10) which focuses the light of the at least one group of light sources (12) in a main radiation direction which in the installed condition faces substantially in the direction of travel,

6. A side flashing lamp according to claim 5 **characterised in that** the optically active device (10) is a strip-shaped or bar-shaped converging lens disposed in front of the at least one group of light sources (12) for focusing in a vertical direction the light from the light sources (12).

7. A side flashing lamp according to claim 6 **characterised in that** the light guide (18, 18') at the same time forms the optically active device and is arranged in front of the at least one group of light sources (12), the light guide being in the form of a converging lens and focusing in a vertical direction the light from the light sources (12).

8. A side flashing lamp according to one of the preceding claims **characterised in that** it includes a plurality of groups of light sources (12) which are arranged distributed substantially uniformly along respective lines, said lines extending in substantially mutually parallel relationship.

9. A side flashing lamp according to claim 8 **characterised in that** a plurality of light guides (8, 8'), and a plurality of converging lenses (10) are arranged alternately in a vertical direction and in immediately mutually adjoining relationship and are each of substantially the same height and are in one piece with each other.

10. A side flashing lamp according to one of the preceding claims **characterised in that** a vapour-deposited reflector plate (20) is arranged between the light sources (12) and behind each of the light guides (8, 8'; 18).

11. A side flashing lamp according to one of the preceding claims **characterised in that** the light exit opening (3) is closed by a light cover (6).

## Revendications

1. Feu latéral indicateur de direction (4, 4') destiné à être monté dans la coque (2) d'un rétroviseur extérieur (1) pour véhicules automobiles comprenant :
- un boîtier de feu, qui comprend une ouverture de sortie de lumière allongée (3), qui s'étend à l'état monté à partir du côté extérieur de la coque (2) éloigné du véhicule sensiblement horizontalement en direction du véhicule,
- un premier agencement de source lumineuse (12) qui s'étend à l'état monté sensiblement horizontalement sur la largeur de l'ouverture de sortie de lumière (3),
- au moins un conducteur optique (8, 8' ; 18), qui s'étend à l'état monté approximativement horizontalement sur la largeur de l'ouverture de sortie de lumière (3), et
- au moins une autre source de lumière (15), dont la lumière est injectée dans l'extrémité frontale (14 ; 26) du conducteur optique (8, 8' ; 18) plus proche du véhicule, lequel conducteur mène la lumière presque entièrement à son extrémité frontale opposée (16 ; 27) et de là rayonne dans une direction s'étendant dans le sens de marche sensiblement de manière oblique vers l'arrière
**caractérisé en ce que** :
- le premier agencement de source lumineuse (12) est constitué d'au moins un groupe de sources lumineuses, qui sont réparties approximativement régulièrement le long d'une ligne qui s'étend à l'état monté approximativement horizontalement sur la largeur de l'ouverture de sortie de lumière (3),
- il comporte plus d'un conducteur optique (8, 8' ; 18, 18') qui sont réalisés respectivement en forme de barre et s'étendent approximativement parallèlement les uns aux autres, et
- chacun des conducteurs optiques (8, 8' ; 18) diffuse sur son extrémité frontale libre (14, 14' ; 27) la lumière de l'autre source lumineuse (15) également dans une direction orientée vers l'arrière par rapport au sens de marche.

2. Feu latéral indicateur de direction selon la revendication 1, **caractérisé en ce que** le conducteur optique (8, 8' ; 18) est pourvu sur son extrémité frontale libre (16, 16' ; 27), sur laquelle il diffuse la lumière injectée par la source lumineuse, d'un chanfrein (17, 17').

3. Feu latéral indicateur de direction selon la revendication 1 ou 2, **caractérisé en ce que** le au moins un groupe de sources lumineuses (12) est constitué de diodes électroluminescentes.

4. Feu latéral indicateur de direction selon l'une quelconque des revendications précédentes, **caractérisé en ce que** la au moins une autre source lumineuse (15) est une diode électroluminescente.

5. Feu latéral indicateur de direction selon l'une quelconque des revendications précédentes, **caractérisé en ce qu'**au moins un élément optiquement actif (10) est prévu, lequel focalise la lumière du au moins un groupe de sources lumineuses (12) dans une direction principale de rayonnement, qui est orientée à l'état monté sensiblement dans le sens de marche.

6. Feu latéral indicateur de direction selon la revendication 5, **caractérisé en ce que** l'élément optiquement actif (10) est une lentille convergente disposée devant le au moins un groupe de sources lumineuses (12), en forme de bande et/ou de barre, focalisant dans la direction verticale la lumière partant des sources lumineuses (12).

7. Feu latéral indicateur de direction selon la revendication 6, **caractérisé en ce que** le conducteur optique (18, 18') forme simultanément l'élément optiquement actif et est disposé devant le au moins au groupe de sources lumineuses (12), en étant réalisé sous la forme d'une lentille convergente et focalisant dans la direction verticale la lumière partant des sources de lumière (12).

8. Feu latéral indicateur de direction selon l'une quelconque des revendications précédentes, **caractérisé en ce qu'**il comporte plusieurs groupes de sources lumineuses (12), qui sont disposés respectivement en étant répartis approximativement régulièrement le long d'une ligne, ces lignes s'étendant approximativement parallèlement les unes aux autres.

9. Feu latéral indicateur de direction selon la revendication 8, **caractérisé en ce que** plusieurs conducteurs optiques (8, 8) et plusieurs lentilles convergentes (10) sont disposés en alternance dans la direction verticale et de manière directement adjacente les uns aux autres, présentent respectivement la même hauteur et sont réalisés de manière monobloc.

10. Feu latéral indicateur de direction selon l'une quelconque des revendications précédentes, **caractérisé en ce qu'**un écran de réflecteur métallisé sous vide (20) est disposé entre les sources lumineuses (12) et derrière chacun des conducteurs optiques (8, 8' ; 18).

11. Feu latéral indicateur de direction selon l'une quelconque des revendications précédentes, **caractérisé en ce que** l'ouverture de sortie de lumière (3) est fermée par une vitre (6).
